Europäisches Patentamt

European Patent Office

Office européen des brevets

(11) Veröffentlichungsnummer: **0 074 649**
**B1**

(12) **EUROPÄISCHE PATENTSCHRIFT**

(45) Veröffentlichungstag der Patentschrift:
24.07.85

(21) Anmeldenummer: 82108403.5

(22) Anmeldetag: 11.09.82

(51) Int. Cl.⁴: **B 65 G 21/20**, B 65 G 21/00,
B 65 G 17/30, B 65 G 23/44

(54) Vorrichtung zur Halterung des Lagerträgers einer Welle einer Bandumlenkung eines Bandförderers.

(30) Priorität: 11.09.81 DE 3135988

(43) Veröffentlichungstag der Anmeldung:
23.03.83 Patentblatt 83/12

(45) Bekanntmachung des Hinweises auf die Patenterteilung:
24.07.85 Patentblatt 85/30

(84) Benannte Vertragsstaaten:
AT BE CH FR GB IT LI LU NL SE

(56) Entgegenhaltungen:
DE - U - 7 607 141
US - A - 3 292 772
US - A - 3 825 108
US - A - 3 952 861

(73) Patentinhaber: Geppert, Helmut, Niederfeld 12,
D-5162 Niederzier-Krauthausen (DE)

(72) Erfinder: Geppert, Helmut, Niederfeld 12,
D-5162 Niederzier-Krauthausen (DE)

(74) Vertreter: Kantner, Hans-Joachim, Dipl.-Ing. et al,
Darmstädter Strasse 8, D-6070 Langen (DE)

ACTORUM AG

## Beschreibung

Die Erfindung bezieht sich auf eine Vorrichtung zur Halterung eines Lagerträgers einer Welle einer Bandumlenkung eines Bandförderers und betrifft mit Vorzug eine solche Vorrichtung zur verschieblichen Halterung des eine Welle einer Bandumlenkung eines Bandförderers, wie beispielsweise die Umlenkwelle oder die Spannwelle, über zwei in Abstand zueinander angeordnete Seitenwangen abstützenden Lagerträgers, bei welcher die Seitenwangen jeweils mit einer Seitenlasche in jeweils eine Aufnahmeöffnung in einem Längsholm des Tragrahmens des Bandförderers eingreifen.

Zur genauen Ausrichtung der beiden Seiten eines Lagerträgers einer Welle einer Bandumlenkung eines Bandförderers gegenüber den benachbarten Enden des Tragrahmens desselben und zur Festlegung des Lagerträgers in seiner einer solchen Ausrichtstellung entsprechenden Arbeitsstellung ist bisher ein nicht unbeträchtlicher konstruktiver und sowohl hinsichtlich der Einzelteilfertigung als auch der Montage arbeits- und damit auch zeit- und kostenintensiver Aufwand erforderlich, indem nämlich auf der Aussenseite der Längsholme des Tragrahmens des Bandförderers entsprechende Widerlagerböcke aufgeschweisst oder aufgeschraubt werden müssen, an denen sich jeweils ein das Wellenlager tragendes Kopfstück in Anlage befindet. Dies bedeutet, dass auf der Seite der Umlenkwelle die Ausrichtung so sorgfältig vorgenommen werden muss, dass die Wellenachse auch möglichst exakt normal zur Förderband-Mittellinie verläuft, da sich die beiden Kopfstücke jeweils in unmittelbarer Anlage an ihren zugeordneten Widerlagerböcken befinden, während auf der gegenüberliegenden Seite der Spannstation die betreffenden die Wellenlager für die Spannwelle aufnehmenden Kopfstücke sich über durch sie hindurchgehende Stellschrauben an ihren zugeordneten Lagerböcken abstützen. Kommt es in einem von beiden Fällen zu Ausrichtfehlern, so ergeben sich erfahrungsgemäss im Laufe bereits verhältnismässig kurzer Betriebsdauern des Bandförderers durch nicht genau mittiges Laufen seines Förderbandes und dadurch bewirktes seitliches Anlaufen am Tragrahmen neben arbeitsphysiologisch ungünstigen Lärmbelästigungen nicht unerhebliche Verschleisserscheinungen, welche die Lebensdauer des Bandförderers herabsetzen und durch Abriebpartikel, welche in das Fördergut gelangen, ganze Fördergutchargen unbrauchbar machen können.

Weiterhin bringt die Notwendigkeit seitlich vom Längsholmprofil des Tragrahmens wegragender Widerlagerböcke unvermeidlich den Nachteil der Notwendigkeit verhältnismässig starker und damit auch gewichtsmässig ungünstiger Ausführung der Widerlagerböcke selbst und ihrer Befestigung am Tragrahmen mit sich, ganz abgesehen davon, dass es erfahrungsgemäss in einer Vielzahl von Einsatzfällen aus sowohl platzmässigen als auch betriebstechnischen Gründen besonders erwünscht ist, Bandförderer zumindest im Bereich zweier benachbarter Stirnenden ihrer Tragrahmen möglichst nah nebeneinander anordnen zu können, um beispielsweise eine einfache und betriebssichere Übergabe-Weichenkonstruktion benutzen zu können, bei welcher auch noch eine möglichst gute Sicherheit gegenüber Herausfallen von Fördergut in die Zwischenräume zwischen zwei benachbarten Bandförderern und damit vor unnötiger Verschmutzung der Umwelt des Aufstellungsortes derselben gegeben ist, wobei jedoch die bekannten Ausführungen von Halterungsvorrichtungen für Wellen-Lagerträger diesen Forderungen entgegenstehen.

Die Anordnung der Wellenlager war bei bekannten Vorrichtungen gattungsgemässer Art so zu treffen, dass die Lagerelemente selbst stets von der Aussenseite her in die Kopfstücke des jeweiligen Lagerträgers einzubringen waren. Hierdurch aber bedingt sich neben einer entsprechenden seitlichen Ausladung für die Abdeckung der Wellenlager und dem dadurch bedingten Nachteil in bezug auf ein enges Aneinanderstellen zweier benachbarter Bandförderer auch eine verhältnismässig aufwendige Stelleinrichtung auf der Seite der Spannstation des Förderbandes, da die Stelleinrichtung stets am Wellenende vorbeigeführt werden muss.

Ein Teil dieser Unannehmlichkeiten wurde bereits erkannt und durch die US-PS 3 825 108 zu beheben versucht. Bei dieser wird in zwei Aufnahmeschlitze eines entsprechend als Extruderprofil aus Aluminium ausgebildeten Rahmenlängsholmes jeweils eine Tragplatte mit zwei entsprechend konfigurierten und angeordneten Fingern eingeschoben, welche die aus Gründen möglichst geringer seitlicher Ausladung hier bereits von der Innenseite her eingebrachte eine Lagerung der durch zwei solche komplementär zueinander angeordnete Tragplatten abgestützten Welle bzw. Achse der zugeordneten Umlenkwalze das Bandförderers trägt. Diese Ausführung erfordert eine recht genaue und damit konstenaufwendige spanabhebende Bearbeitung der äusseren und inneren Schmalseitenflächen der beiden Finger dieser Tragplatten, um zu gewährleisten, dass diese leichtgängig verstellbar in den hierfür vorgesehenen Aufnahmeschlitzen des jeweils zugeordneten Tragrahmenlängsholmprofils geführt werden. Als Verstelleinrichtung ist bei dieser bekannten Ausführung einer gattungsgemässen Vorrichtung ein am Tragrahmen mittig zur Drehachse der betreffenden Umlenkwalze des Bandförderers festgeschraubter Widerlagerbock vorgesehen, der ein zur horizontalen Mittellängsebene des Längsholmprofils des Tragrahmens parallele Gewindebohrung aufweist, in der sich mit ihrem umlenkwalzennahen Ende an einer Stirnfläche der Tragplatte abstützende Stellschraube läuft. Eine solche Ausführung benötigt einerseits eine nicht unbeachtliche Zahl von Einzelteilen, die zudem auch noch besonderer spanabhebender Bearbeitung bedürfen und damit gestehungskostensteigernd wirken, und bringt notwendigerweise eine nicht unbeträchtliche seitliche Ausladung quer zur Förderrichtung mit sich. Eine solche aber ist bei vielen Ausführungen von Bandförderern gerade nicht erwünscht und auch im Falle des aus der US-PS 3 825 108 bekannten Plattenbandes nur deswegen tolerierbar, weil die Breite der Tragplatten des Fördermittels die ansonsten unerwünschte Ausladung übergreifend gewählt ist, so dass gleichartige Plattenbandförderer in für spaltfreie seitliche Übergabe von zu förderndem Stückgut geeigneter fluchtender seitlicher Zuordnung zueinander angeordnet werden können. Insbesondere für Bandförderer mit elastisch biegsamem Fördermittel, das üblicherweise keine die Gesamtbreite des Bandförderers über seinen beiden Tragrahmenlängsholmen übergreifende Breite aufzuweisen pflegt, ist diese bekannte Ausführung ungeeignet, wenn es gilt eine Möglichkeit zu schaffen, seitlich einander benachbarte Bandförderer möglichst nahe aneinander anzuordnen.

Ferner ist aus der US-PS 3 952 861 ein Doppelriemenförderer bekannt, bei dem die Längsholme des Tragrahmens jeweils aus einem geschlossenen Kastenprofil (Quadratrohr) gebildet sind und in die hierdurch gebildeten Stirnöffnungen jeweils ein entsprechend geringer dimensionierter Führungsansatz jeweils eines Lagerträgers für jeweils eine Umlenkrolle für den zugeordneten Riemen des Fördermittels verschieblich eingeführt ist. Dabei ist jeweils die Welle bzw. Achse der betreffenden Umlenkrolle in zwei sich gabelzinkelförmig von dem Führungsansatz nach aussen wegerstreckenden Tragblechen gehaltert, welche jeweils die Lager für die betreffende Welle bzw. Achse abstützen. Diese Lager sind dabei entweder von der Aussenseite her auf das äussere Gabelzinkenblech aufgeschraubt oder aber von der freien Stirnseite her in eine entsprechende schlitzförmige Aufnahmeausnehmung eingeschoben.

Die Verstellung des jeweiligen Rollenträgers erfolgt dadurch, dass eine sich gegenüber einer rollenträgerfesten Nase abstützende und in einer tragrahmenfesten Nase mit Gewindeloch geführte zur horizontalen Mittellängsebene des zugeordneten Rahmenlängsholmprofils parallele Stellschraube verdreht und mit einer Kontermutter gegenüber der tragrahmenstellfesten Nase festgelegt wird.

Auch hier ist eine die durch die Aussenabmessungen des Tragrahmens bedingte Breite überschreitende Baubreite unvermeidlich und ergibt sich nachteilig eine nicht unbeträchtlich grosse Anzahl von Einzelteilen mit entsprechend hohem Kosten- und Bearbeitungs- und Montagezeitaufwand.

Schliesslich ist durch das DE-GM 7 607 141 eine Ausführung eines Kratzer-Förderers zum Transport von Spänen bekannt geworden, bei welcher zwar eine Umlenkwalze für das Fördermittel in Form der beiden über die Kratzerglieder miteinander verbundenen Kettenstränge fehlt, weil die beiden Rollenketten auf jeweils tragrahmengestellfest angeordneten halbkreisförmigen Umlenkkulissen geführt sind, bei der aber zwei durch eine Kettensternachse miteinander drehfest verbundene Kettensterne vorgesehen sind, wobei diese Kettensternachse von einem Spannbügel getragen wird. Dieser übergreift die gesamte antriebsseitige Stirnseitenbreite des Förderers und weist auf beiden Seiten je ein Paar Schenkel auf, welche die Aussenseite des zugeordneten Tragrahmenlängsholms übergreifen und jeweils auf einer an diesem eigens festgelegten Gleitleiste verschieblich geführt sind. Die als Antriebswelle dienende Kettensternachse ist dabei beidendig in von der Aussenseite her auf die Schenkel des Spannbügels aufgebrachten Lagern drehbar gelagert. Zur Verschiebung der Kettensternachse in Spannrichtung weisen die beiden Längsholmprofile des Tragrahmens Langlöcher auf, durch welche die Kettensternachse hindurch- und in ihre spannbügelfesten Lager eingreift. Auf der einen Seite weist die Kettensternachse eine Steckkupplung für das Abtriebsende der Antriebswelle des gleichfalls am Spannbügel gehalterten und mit diesem verschieblichen Antriebsmotors auf.

Die Spannverstellung des Spannbügels relativ zum Tragrahmen erfolgt durch Verstellung jeweils in einem Gewindeloch in dem die Förderbreite des Bandförderers übergreifenden Bereich des Spannbügels geführter Stellschrauben, die sich jeweils mit ihrem tragrahmennahen Ende an einer die Stirnseiten der beiden Längsholme des Tragrahmens dessen Förderbreite übergreifend verbindenden Endplatte 50 abstützen.

Diese bekannte Ausführung erfordert eine vergleichsweise noch grössere Zahl von Einzelteilen mit zudem noch erheblich grösserem Mehraufwand an spanabhebender Bearbeitung und Montage und bedingt einen vergleichsweise noch grösseren seitlichen Bauraum. Nachteilig kommt dabei hinzu, dass durch denn Spannbügel der stirnseitige Zugriff zum Förderer beeinträchtigt ist. Ausserdem muss für die Stellschrauben für die Verstellung des Spannbügels ein gewisses Mindestmass an Bauraum in Längs- bzw. Förderrichtung vorgesehen werden, wodurch die nahtlose Einfügung eines Förderers mit in dieser Weise ausgebildeter Spannvorrichtung in-eine vor- oder nachgeschaltete Aggregate beinhaltende Förderstrasse erheblich beeinträchtigt, wenn nicht gar unmöglich gemacht wird.

Allen beschriebenen bekannten Ausführungen ist überdies gemeinsam, dass sie eine verhältnismässig komplizierte, nicht für kostengünstige Herstellung als Blechformlinge geeignete Konfiguration der Längsholmprofile des Tragrahmens mit entsprechendem Materialgewicht und damit verbundenem zusätzlichem Konstenaufwand und/oder eine verhältnismässig grossflächige Ausführung des die Welle bzw. Achse der betreffenden Umlenkwalze des Fördermittels für Versatzbewegung relativ zum Tragrahmen abstützenden bzw. halternden Elementes, durch welche gleichfalls wiederum neben einem zusätzlichen Fertigungsaufwand eine nicht unbeträchtliche Erhöhung des Materialgewichtes bedingt wird, die ihrerseits gleichfalls nachteilig auf die Gestehungskosten des gesamten Förderers durchschlägt, erfordern.

Der Erfindung liegt daher die Aufgabe zugrunde, eine Möglichkeit zu schaffen, unter Vermeidung der Nachteile bekannter Ausführungen von Vorrichtungen zur Halterung des Lagerträgers einer Welle einer Bandumlenkung eines Bandförderers mit einfachen und kostengünstigen Mitteln eine Vorrichtung gattungsgemässer Art so zu verbessern, dass durch Verwendung besonders leichter und dennoch ausreichend biege- und/oder torsionssteifer Bauteile eine spezifisch verbesserte Leichtbauweise mit entsprechenden Gewichts- und damit auch Materialkosteneinsparungen und auch fertigungstechnischen Verbesserungen durch die Möglichkeit des Einsatzes auch ungeschulten Personals bei Erstellung der Einzelteile und deren Montage einerseits eine nicht unerhebliche Senkung der Gestehungskosten einer solchen Vorrichtung bei ausreichender, wenn nicht gar verbesserter Verschleissfreiheit und damit einhergehend entsprechender Wartungsarmut, aus welcher der Vorteil der Vermeidung von unerwünschten Unterbrechungen des Gesamtbetriebsablaufes der Förderstrasse aus Bandförderer und diesem vor- und/oder nachgeschalteter Förder- oder Be- bzw. Verarbeitungsvorrichtung resultiert, und andererseits die wichtige Möglichkeit besonders naher bzw. enger Anordnung zweier benachbarter Bandförderer mit die Gesamtbreite des Tragrahmen nicht überschreitender Breite der Fördermittels mit bisher nicht möglicher besonders einfacher und betriebssicherer Ausgestaltung beispielsweise einer Fördergut-Übergabeweiche zwischen beiden benachbarten Bandförderern erbracht wird.

Diese vielgestaltige Kombinationsaufgabe wird durch die Erfindung im überraschend einfacher und wirtschaftlicher Weise dadurch gelöst, dass bei einer Vorrichtung zur vorzugsweise verschieblichen Halterung des eine Welle einer Bandumlenkung eines Bandförderers, wie beispielsweise die Umlenkwelle oder die Spannwelle, über zwei in Abstand zueinander angeordnete Seitenwangen abstützenden Lagerträgers, bei welcher die Seitenwangen jeweils mit einer Seitenlasche in jeweils eine Aufnahmeöffnung in einem Längsholm des Tragrahmens des Bandförderers eingreifen, die Seitenlaschen des Lagerträgers jeweils geringere Höhe als die lichte Höhe der Aufnahmeöffnung im zugeordneten Längsholm des Tragrahmens aufweisen und mit ihrer oberen oder unteren Stirnfläche an einer zugeordneten Anlagefläche der Aufnahmeöffnung in Anlage gehalten sind und dass in den Zwischenraum zwischen anlageflächenferner Stirnfläche und dieser benachbarter Innenfläche der Aufnahmeöffnung des zugeordneten Längsholmes des Tragrahmens jeweils ein Zwischenstück mit einem Anschlag mit aus dem Längsholm herausragender Anschlagfläche für eine Nase des Lagerträgers eingreift, wobei der Anschlag mit seiner längsholmnahen Seite zur Anlage am Längsholm kommt.

Dabei kann gemäss einem die Erfindung zweckmässig fortbildenden untergeordneten Erfindungsgedanken vorgesehen sein, dass die Seitenlaschen der Seitenwangen des Lagerträgers jeweils mit ihrer unteren Stirnfläche in Anlage an der benachbarten Anlagefläche der Aufnahmeöffnung des zugeordneten Längsholms gehalten sind und dass das zugeordnete Zwischenstück jeweils eine nach oben aus dieser Aufnahmeöffnung herausragende Abwinkelung aufweist, gegenüber welcher sich die zugeordnete Nase des Lagerträgers abstützt, oder aber alternativ zu diesem untergeordneten Erfindungsgedanken dass die Seitenlaschen der Seitenwangen des Lagerträgers jeweils mit ihrer oberen Stirnfläche in Anlage an der benachbarten Anlagefläche der Aufnahmeöffnung des zugeordneten Längsholms gehalten sind und dass das zugeordnete Zwischenstück jeweils eine nach unten aus dieser Aufnahmeöffnung herausragende Abwinkelung aufweist, gegenüber welcher sich die zugeordnete Nase des Lagerträgers abstützt.

Es ist ersichtlich, dass durch die Erfindung somit eine bauraumsparende und seitliche Überstände über die Aussenoberfläche des Tragrahmens praktisch vollständig vermeidende Konstruktion erzielbar ist, welche zudem trotz ausreichender Verformungssteifigkeit sich auch noch durch besondere Gewichtseinsparung auszeichnet. Weiterhin bietet die Erfindung die Möglichkeit für exakte fördermittennormale Ausrichtung der Wellenachse auch für die Seite der Umlenkwelle, indem durch die erfindungsspezifische Anordnund und Ausbildung von jeweils in zugeordnete Aufnahmeöffnungen der Längsholme des Tragrahmens einführbaren Zwischenstücken hinsichtlich ihrer örtlichen Lage in Förderer-Längsrichtung fixierte Stützflächen geschaffen werden, gegenüber denen sich eine Anlageabstützung des Lagerträgers auf dessen beiden Seiten in, sofern erwünscht, auch unterschiedlicher Form verwirklichen lässt. Erst recht aber wirkt sich diese erfindungsgemässe Lösung vorteilhaft auf der Seite der Spannstation aus, zumal hier sich besonders der Vorteil auswirkt, dass die Verstellung der Spannwellenachse gegenüber dem Tragrahmen nicht mehr über über dessen Seitenkontur wesentlich hinausragende Mittel vorgenommen zu werden braucht.

Besonders bewährt hat sich für die verschiebliche Halterung des Lagerträgers für die Spannwelle einer Umlenkwalze eines elastisch biegsamen Förderbandes oder eines Umlenkstern eines Scharnier- oder Plattenkettenbandes eine Ausführungsform der Vorrichtung nach der Erfindung, bei welcher die Anschlagfläche des Zwischenstückes jeweils durch eine Abwinkelung desselben gebildet ist und sich an dieser jeweils eine von der Rahmenstirnseite her betätigbare, durch einen die Nase des Lagerträgers bildenden Block hindurchgehende Stellschraube abstützt.

Ersichtlich geht die Erfindung einen von den bisherigen Ausführungen abweichenden Weg, indem nicht mehr eine zusätzliche, die gesamte Konstruktion sowohl gewichtsmässig als auch betriebstechnisch belastende seitliche oder in der Förderbreite liegende Widerlagerausführung Verwendung findet, sondern nach der Erfindung vielmehr ohne eine solche das Profil des Längsholms des Tragrahmens selbst als Widerlager für die Abstützung des zugeordneten Lagerträgers herangezogen wird, und zwar dies zudem auch noch in seiner Ebene grössten Widerstandsmomentes gegenüber Biegung und/oder Torsion, nämlich parallel zu seiner vertikalen Mittellängsebene.

Dabei lässt sich eine die Lösung der vorstehenden Kombinationsaufgabe vorteilhaft fördernde weitere Verbesserung dadurch erzielen, dass das Zwischenstück als Winkel aus Bandstahlmaterial ausgebildet ist. Es handelt sich hierbei um einen besonders kostengünstigen Normprofil-Formling, welcher zudem auch noch besonders raumsparend und dennoch zweckmässig gehalten innerhalb des durch das Profil des jeweils zugeordneten Längsholmes des Tragrahmens zur Verfügung gestellten Bauraumes untergebracht werden kann.

Eine erstmalig durch die Erfindung ermöglichte zweckmässige Ausführung kennzeichnet sich gemäss einem untergeordneten Erfindungsgedanken dadurch, dass die Seitenwangen des Lagerträgers jeweils eine von innen zugängliche Aufnahmeausnehmung für ein Wellenlager mit diese nach aussen begrenzendem Anlageflansch für dieses aufweisen. Hierdurch wird erstmalig die Anordnung von auf beiden Seiten in den Lagerträger einfügbaren Wellenlagern verwirklichbar, welche wesentliche Überstände der Wellenstummel über die seitliche Aussenkontur des Tragrahmens hinaus vermeidbar macht, was wiederum der Lösung der eingangs geschilderten Aufgabe höchst dienlich ist.

In die Erfindung im Hinblick auf weitere Verbesserung der Leichtbauweise erfinderisch fortbildender weiterer Ausgestaltung können die Aufnahmeöffnungen der Längsholme des Tragrahmens jeweils durch das Maul eines in an sich bekannter Weise in Richtung des Förderbandes offen angeordneten Profils etwa C-förmigen Querschnittes mit einem Bodensteg und sich von dessen beiden Seiten wegerstreckenden Seitenstegen gebildet sein. Dabei kann gemäss weiterer zweckmässiger Ausgestaltung das Maul durch zumindest einen einen der Seitenstege verlängernden Randflansch in Richtung Förderband begrenzt sein. Mit Vorteil kann dabei der Randflansch mit dem gegenüberliegenden Bereich des Bodensteges eine Einführungsnut für das Zwischenstück bilden.

Je nach Bedarf kann bei diesem untergeordneten Erfindungsgedanken und seinen Weiterbildungen das Profil etwa C-förmigen Querschnittes Randflansche als Verlängerungen seiner beiden Seitenstege, nämlich des obenliegenden ebenso wie des untenliegenden Seitensteges, aufweisen, was sich häufig bei Rahmenausführungen für Bandförderer mit elastisch biegsamem Förderband empfehlen kann, oder aber es kann das C-Profil der Längsholme des Tragrahmens lediglich eine Randflanschverlängerung an seinem obenliegenden Seitensteg aufweisen, während der untenliegende Seitensteg flanschlos ausgeführt ist. Diese letztere Ausführungsform empfiehlt sich in durch die Erfindung erstmalig ermöglichter Weise nicht selten für solche Bandförderer, bei denen das Förderband in Form von zumindest einer Scharnier- oder Plattenkette ausgeführt ist und das Untertrum eines solchen Kettenbandes durch Auflage auf der Innenseite des untenliegenden Seitenstegs des Längsholmprofils geführt werden soll.

Zwar ist grundsätzlich in allen Fällen eine Ausführung der Erfindung mit obenliegendem oder untenliegendem Zwischenstück möglich, jedoch wird sich nicht selten gerade bei Ausführungen mit Förderband in Form von Scharnier- oder Plattenkette(n) die Anordnung des Zwischenstückes unterhalb der zugeordneten Seitenlasche des Lagerträgers als empfehlenswert erweisen, sofern die Möglichkeit besteht, über eine entsprechende Einführöffnung im zugeordneten Längsholmprofil die Randbereiche des Kettenband-Untertrums innenseitig vom jeweiligen wellenfernen Ende der zugeordneten Seitenlasche in das Innere des Längsholms des Tragrahmens einzuführen.

In jedem Falle jedoch ist durch die erfindungsgemässe Konzeption die Möglichkeit gegeben, Einstellungen und Justierungen von der jeweiligen Stirnseite des Tragrahmens her vorzunehmen.

Gemäss einem die Erfindung zweckmässig fortführenden anderen untergeordneten Erfindungsgedanken kann der Lagerträger durch kraftschlüssige Halterung der Seitenlasche seiner beiden Seitenwangen an den zugeordneten Längsholm des Tragrahmens gegenüber diesem fixiert sein. Hierfür können mit Vorteil die Seitenlaschen jeweils einen Längsschlitz aufweisen, durch welchen eine eine Spannlasche gegen die Innenseite der Seitenlasche ziehende Schraubverbindung hindurchgreift. Diese Schraubverbindung kann mit Vorteil jeweils mindestens zwei durch Löcher im jeweiligen Längsholm des Tragrahmens, vorzugsweise im Bodensteg eines diesen bildenden Profils etwa C-förmigen Querschnittes, hindurchgreifende Schrauben aufweisen.

Im Interesse der Vermeidung über die seitliche Aussenkontur des Tragrahmens wesentlich hinausragender Bauteile kann in weiterer vorteilhafter Fortbildung dieser Ausführungsform die kraftschlüssige Halterung von der Innenseite der Seitenlaschen der Seitenwangen des Lagerträgers her betätigbar sein. Hierfür können, sofern die kraftschlüssige Halterung durch Löcher in den Längsholmen des Tragrahmens hindurchgreifende Schrauben aufweist, diese zweckmässig mit ihrem Kopf jeweils zumindest teilweise in einer aussenseitigen Ansenkung des jeweiligen Längsholms des Tragrahmens liegen und von der Innenseite her über Muttern festspannbar sein, wodurch gleichfalls zur Einhaltung geringstmöglicher Seitenbaumasse beigetragen wird.

Im folgenden wird die Erfindung anhand eines bevorzugten Ausführungsbeispiels, welches in den Zeichnungen schematisch dargestellt ist, rein beispielsweise näher erläutert. Dabei zeigen:

Fig. 1 eine Draufsicht auf ein bevorzugtes Ausführungsbeispiel eines Längholmes eines Tragrahmens mit Vorrichtung nach der Erfindung von der Innenseite, d.h. von der Seite des offenen Mauls des als Längsholm verwandten C-Profils her entgegen der Richtung des Pfeiles A gemäss Fig. 2 gesehen, und

Fig. 2 eine Stirnansicht des C-Profils gemäss Fig. 1 mit der Vorrichtung gemäss Fig. 1 von deren linker Seite her gesehen.

Mit 2 ist der Tragrahmen eines Bandförderers als Ganzes und mit 1 der Lagerträger einer im übrigen nicht dargestellten Welle einer Bandumlenkung dieser Bandförderers als Ganzes dargestellt, wobei diese Bandumlenkung sowohl die Rückführung des Förderbandes an der Umlenkwelle oder im Bereich der die Spannwelle umfassenden Spannstation sein kann und als Förderband sowohl ein elastisch biegsames Band aus Textil-, Gummi- oder Kunststoffmaterial mit oder ohne Mitnehmerstege als auch ein Scharnier- oder Plattenkettenband oder mehrere solchen Bänder in Frage kommen.

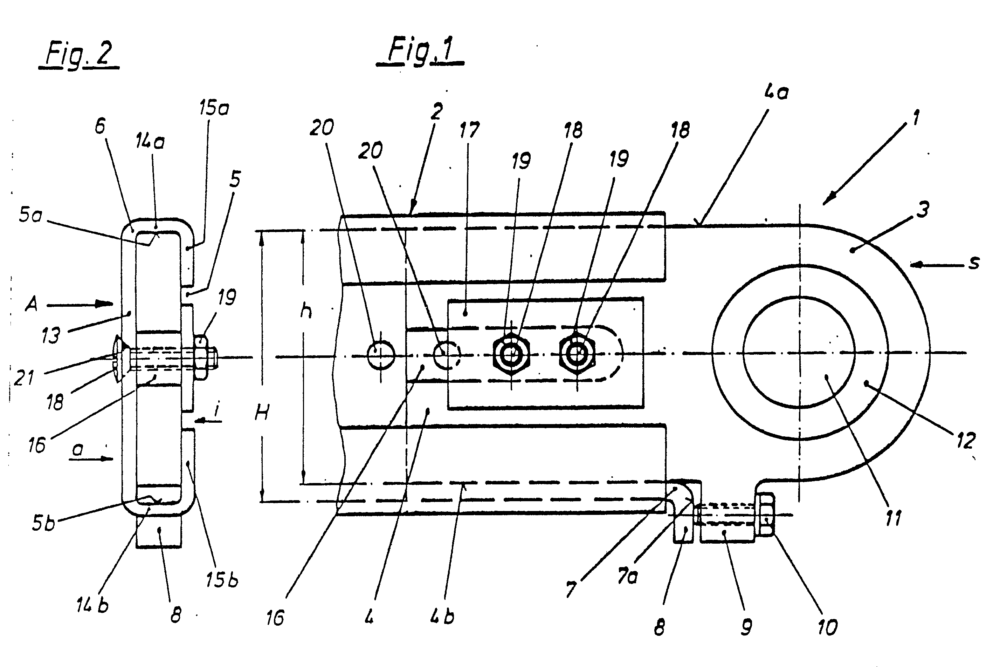

In Fig. 1 und 2 sind jeweils lediglich ein Längsholm des Tragrahmens 2 dargestellt, der mit 6 bezeichnet ist und die Form eines Metallprofils mit etwa C-förmigen Querschnitt mit einem etwa vertikal stehenden Bodensteg 13 und sich von diesem etwa rechtwinklig wegerstreckendem obenliegendem Seitensteg 14a und sich gleichfalls etwa rechtwinklig wegerstreckendem untenliegendem Seitensteg 14b aufweist, wobei jeweils die bodenstegfernen Enden des obenliegenden Seitensteges 14a und des untenliegenden Seitensteges 14b sich in Randflansche 15a bzw. 15b verlängern, welche jeweils im wesentlichen parallel zum Bodensteg 13 verlaufen. Im Inneren des Längsholm-Profils wird ein zum nicht dargestellten Förderband hin offener Aufnahmeraum 5 für eine Seitenlasche 4 des Lagerträgers 1 der Umlenkwelle oder der Spannwelle des Bandförderers gebildet.

Die Seitenlasche 4 des zwei in Abstand zueinander angeordnete Seitenwangen 3 aufweisenden Lagerträgers 1 weist eine Höhe h auf, welche geringer ist als die lichte Höhe H zwischen zwei Anlageflächen 5a und 5b auf der Innenseite der Seitenstege 14a und 14b des Längsholm-Profils 6.

Beim dargestellten Ausführungsbeispiel wird die Seitenlasche 4 des Lagerträgers 1 mit ihrer oberen Anlagefläche 4a dadurch in Anlage an der benachbarten Anlagefläche 5a des obenliegenden Seitensteges 14a des Längsholm-Profils 6 des Tragrahmens 2 gehalten, dass in den Raum zwischen der unteren Anlagefläche 4b des Seitensteges 4 des Lagerträgers 1 und der inneren Anlagefläche 5b des untenliegenden Seitensteges 14b des Längsholm-Profils 6 ein Zwischenstück 7 so eingefügt ist, dass es sich einerseits in Anlage an der Anlagefläche 4b der Seitenlasche 4 des Lagerträgers 1 und andererseits der Anlagefläche 5b des Seitensteges 14b des Längsholm-Profils 6 befindet.

Das Zwischenstück 7 ist als Winkel aus Bandstahlmaterial ausgebildet, wie insbesondere in Fig. 1 dargestellt. Seine Abwinklung 8 bietet eine Widerlagerbzw. Anlagefläche 7a für die Abstützung der als Seitenwange ausgebildeten Lageraufnahme 3 des Lagerträgers 1 und ruht mit seiner abstützungsfernen (in Fig. 1 linken) Oberfläche rastend auf der benachbarten Stirnfläche des Längsholm-Profils 6.

Wie insbesondere aus Fig. 2 erkennbar, wird zwischen dem Bodensteg 13 des Längsholm-Profils 6 und dem dessen untenliegenden Seitensteg 14b mit Vorzug bodenstegparallel verlängernden Randflansch 15b eine Aufnahmenut gebildet, in welche das Zwischenstück 7 vorzugsweise satt passend so einfügbar ist, dass es keinen Freiheitsgrad mehr für Bewegungen in Richtung quer zum Längsholm-Profil 6, also in Richtung des Pfeiles i oder des Pfeiles a gemäss Fig. 2, welche die Innenseite bzw. die Aussenseite des Tragrahmens 2 symbolisieren, besitzt. Eine solche Seitenführung ist jedoch keineswegs zwingend erforderlich, da die erfindungsgemässe Wirkung des Zwischenstückes 7 als örtliche Fixierung einer Widerlagerfläche 7a für den Lageraufnahmekörper 3 des Lagerträgers 1 auch dann erzielt wird, wenn dem Zwischenstück 7 eine gewisse Lose innerhalb des Längsholm-Profils 6 belassen wird. Dadurch nämlich, dass sich die Abkröpfung bzw. Abwinkelung 8 des Zwischenstückes 7 formschlüssig an der lagerseitigen Stirnfläche des Längsholm-Profils 6 abstützt (vergleiche beispielsweise Fig. 1), wird eine grossflächige Widerlagerfläche in einem bestimmten Abstand zu dieser Längsholm-Profil-Stirnfläche fixiert, wobei es nach dem erfindungsgemässen Konzept überhaupt nicht darauf ankommt, welche genaue örtliche Lage diese Widerlagerfläche 7a zum Ende des Tragrahmens 2 besitzt.

Die gewünschte bandförderermittellängsebenennormale Ausrichtung der Wellenachse wird nämlich dadurch erreicht, dass einerseits die Anschlägefläche 7a des Zwischenstückes 7 durch die Abwinkelung 8 desselben gebildet ist und dass andererseits am Lagerträger 1 ein die Stütznase bildender Block 9 angeformt ist, durch welchen eine in ein in dieses eingeformtes Gewinde eingreifende Stellschraube 10 hindurchgreift, welche sich mit ihrem zwischenstückseitigen Stirnende an der Anschlagfläche 7a desselben abstützt. Durch entsprechende Drehung der Stellschraube 10 und gegebenenfalls Fixierung der gewünschten Stellung derselben durch beispielsweise Konterung auf einer oder beiden Seiten des Tragrahmens 2 lässt sich die gewünschte genaue fördermittellängsebenennormale Ausrichtstellung der Wellenachse festlegen. Um diese Ausrichtstellung nunmehr auch noch zu fixieren, ist eine kraftschlüssig arbeitende Halterung für den Lagerträger 1 bzw. dessen Seitenwangen 3 am Tragrahmen 2 vorgesehen. Hierfür weist die Seitenlasche 4 einer jeden Seitenwange 3 einen Längsschlitz 16 auf, der Löcher 20 im Längsholm-Profil 6, und zwar beim dargestellten Ausführungsbeispiel in dessen Bodensteg 13 überdeckend angeordnet ist. Die Löcher 20 weisen von der Aussenseite a des Tragrahmens 2 her Ansenkungen 21 auf, wie in Fig. 2 dargestellt. Mit ihrem Kopf auf der Aussenseite a eines jeden Längsholm-Profils liegend greifen jeweils durch zwei Löcher 20 der Lochreihe jedes Längsholm-Profils 6 Spannschrauben 18 hindurch, welche auch entsprechende, nicht näher bezeichnete Durchgangslöcher in einer Spannlasche 17 durchsetzen. Von der Innenseite i her sind auf die freien Schraubenden der Spannschrauben 18 jeweils Muttern 19 aufgeschraubt, mittels derer die kraft- bzw. reibschlüssige Haftverbindung zwischen in den Aufnahmeraum 5 des Längsholm-Profils 6 eingeführter Seitenlasche 4 des Lagerträgers 1 und dem jeweils zugeordneten Längsholm-Profil mittels der Verspannung über die Schraubverbindung 18, 19 und die Spannlasche 17 erbracht wird. Anders als in Fig. 1 und 2 dargestellt, können dabei die Muttern 19 auch als Schnellspannmuttern beispielsweise in Flügelmutterausführung ausgebildet sein.

Wie aus beispielsweise Fig. 1 ersichtlich, ist eine Aufnahme der Lagerung der jeweiligen Welle von der Innenseite i des Tragrahmens 2 her möglich und vorgesehen. Hierfür weist, wie in Fig. 1 dargestellt, die als Lageraufnahme dienende Seitenwange 3 des Lagerträgers 1 eine von der Innenseite i her zugängliche Aufnahmeausnehmung 11 für ein Wellenlager mit diese nach der Aussenseite a hin begrenzendem Anlageflansch 12 für das nicht dargestellte Wellenlager auf. Hierdurch braucht die ausgerichtet abzustützende Welle keine wesentlich über die Aussenkontur der Tragrahmen-Konstruktion 2 hinausragenden Abmessungen zu haben. Selbst der Antrieb kann in den meisten Fällen von der Innenseite i der Tragrahmen-Konstruktion 2 her vorgenommen werden.

Für einen etwa erforderlichen Lagerausbau braucht anders als bei bekannten Ausführungen lediglich der jeweilige Lagerträger 1 samt von ihm getragener Wellenlagerung und Umlenk- oder Spannwelle nach Lösen der kraftschlüssigen Halterung durch die Schraubverbindung 18, 19 mit der Spannlasche 17 aus der stirnseitigen Öffnung beider Längsholm-Profile 6 des Tragrahmens 2 herausgezogen zu werden. Hierdurch wird bei etwaigen Montage- und/oder Wartungsarbeiten der erforderliche Arbeits- und Zeitaufwand wesentlich gesenkt, was nicht nur den Wartungskosten, sondern über die Verkürzung der Wartungstotzeiten insbesondere auch den allgemeinen Betriebskosten des Gesamtfördervorganges vorteilhaft zugute kommt.

In gleicher Weise wirkt sich vorteilhaft aber auch die bereits beschriebene Einstellbarkeit der Vorrichtung nach der Erfindung von der Stirnseite s des Tragrahmens 2 her aus, da ungeachtet dessen, ob eine entsprechende Verstellung für die Ausrichtung oder gegebenenfalls Nachjustierung der Umlenkwelle oder aber der Spannwelle des Bandförderers erforderlich ist, diese immer ohne häufig nur durch Unterbrechung des Gesamtförderbetriebes möglichen Zugriff von der Aussenseite a des Förderers her möglich ist, und zwar dies gemäss einer untergeordneten Aufgabenstellung sogar bei laufendem Förderbetrieb.

Es ist ersichtlich, dass durch die Erfindung eine Möglichkeit für eine weitgehende Rationalisierung nicht nur der Herstellung und Montage von Bandförderern der eingangs beschriebenen Art und auch für nachträgliche Justierungen und Anpassungen an betriebliche Anforderungsänderungen geschaffen ist, sondern dass auch Möglichkeiten für gesteigerte Leichbauweise mit entsprechender Material- und Gewichtseinsparung und vergleichsweise grösserer Freizügigkeit in der konstruktiven Ausgestaltung eröffnet werden. Im übrigen ist die Erfindung nicht auf die dargestellten und beschriebenen Ausführungsbeispiele beschränkt, vielmehr stehen dem Fachmann vielfältige Möglichkeiten offen, sie durch andere Kombination ihrer Merkmale oder deren Austausch gegen gleichwertige Mittel an die jeweiligen konstruktiven Gegebenheiten und/oder die Forderungen des jeweiligen einzelnen Einsatzfalles anzupassen, ohne dadurch den Rahmen der Erfindung zu verlassen.

Insbesondere ist darauf hinzuweisen, dass entgegen der als einzige dargestellten Ausführungsform mit untenliegendem Zwischenstück 7 das Zwischenstück auch auf der Oberseite der Anlagefläche 4a der Seitenlasche 4 des Lagerträgers 1 angeordnet sein kann, wobei sich dann die Seitenlasche 4 mit ihrer unteren Anlagefläche 4b in Anlage an der benachbarten Anlagefläche 5b des untenliegenden Seitensteges 14b des Längsholm-Profils 6 befindet und die durch den Block 9 gebildete Nase des Lagerträgers 1 sich nach oben hin erstreckt, dann allerdings vorzugsweise nicht über die obere Aussenkontur des Längsholm-Profils 6 hinausragen sollte, wenn diese als Auflagefläche für das Förderband, sei dieses nun als elastisches biegsames Band aus Textil- oder Gummi- oder Kunststoffmaterial oder aber als Scharnier- oder Plattenkettenband ausgebildet, herangezogen wird. Im übrigen sind auch andere Querschnittsformen für Längsholm-Profile zur Verwirklichung der Erfindung mit anders ausgebildeten Aufnahmeöffnungen für die Seitenlaschen 4 des Lagerträgers 1 möglich.

**Patentansprüche**

1. Vorrichtung zur vorzugsweise verschieblichen Halterung des eine Welle einer Bandumlenkung eines Bandförderers, wie beispielsweise die Umlemkwelle oder die Spannwelle, über zwei in Abstand zueinander angeordnete Seitenwangen (3) abstützenden Lagerträgers (1), bei welcher die Seitenwangen (3) jeweils mit einer Seitenlasche (4) in jeweils eine Aufnahmeöffnung in einem Längsholm (6) des Tragrahmens (2) des Bandförderers eingreifen, dadurch gekennzeichnet, dass die Seitenlaschen (4) des Lagerträgers (1) jeweils geringere Höhe (h) als die lichte Höhe (H) der Aufnahmeöffnung (5) im zugeordneten Längsholm (6) des Tragrahmens (2) aufweisen und mit ihrer oberen oder unteren Stirnfläche (4a bzw. 4b) an einer zugeordneten Anlagefläche (5a bzw. 5b) der Aufnahmeöffnung (5) in Anlage gehalten sind und dass in den Zwischenraum zwischen anlageflächenferner Stirnfläche und dieser benachbarter Innenfläche der Aufnahmeöffnung (5) des zugeordneten Längsholmes (6) des Tragrahmens (2) jeweils ein Zwischenstück (7) mit einem Anschlag (8) mit aus dem Längsholm (6) herausragender Anschlagfläche (7a) für eine Nase (9) des Lagerträgers (1) eingreift, wobei der Anschlag (8) mit seiner längsholmnahen Seite zur Anlage am Längsholm (6) kommt.

2. Vorrichtung nach Anspruch 1, dadurch gekennzeichnet, dass die Seitenlaschen (4) der Seitenwangen (3) des Lagerträgers (1) jeweils mit ihrer unteren Stirnfläche (4b) in Anlage an der benachbarten Anlagefläche (5b) der Aufnahmeöffnung (5) des zugeordneten Längsholms (6) gehalten sind und dass das zugeordnete Zwischenstück (7) jeweils eine nach oben aus dieser Aufnahmeöffnung (5) herausragende Abwinkelung (8) aufweist, gegenüber welcher sich die zugeordnete Nase (9) des Lagerträgers (1) abstützt.

3. Vorrichtung nach Anspruch 1, dadurch gekennzeichnet, dass die Seitenlaschen (4) der Seitenwangen (3) des Lagerträgers (1) jeweils mit ihrer oberen Stirnfläche (4a) in Anlage an der benachbarten Anlagefläche (5a) der Aufnahmeöffnung (5) des zugeordneten Längsholms (6) gehalten sind und dass das zugeordnete Zwischenstück (7) jeweils eine nach unten aus dieser Aufnahmeöffnung (5) herausragende Abwinkelung (8) aufweist, gegenüber welcher sich die zugeordnete Nase (9) des Lagerträgers (1) abstützt.

4. Vorrichtung nach einem der vorhergehenden Ansprüche zur verschieblichen Halterung des Lagerträgers für die Spannwelle einer Umlenkwalze eines elastisch biegsamen Förderbandes oder eines Umlenksterns eines Scharnier- oder Plattenkettenbandes, dadurch gekennzeichnet, dass die Anschlagfläche (7a) des Zwischenstückes (7) jeweils durch eine Abwinkelung (8) desselben gebildet ist und dass sich an dieser jeweils eine von der Rahmenstirnseite (s) her betätigbare, durch einen die Nase des Lagerträgers (1) bildenden Block (9) hindurchgehende Stellschraube (10) abstützt.

5. Vorrichtung nach einem der vorhergehenden Ansprüche, dadurch gekennzeichnet, dass das Zwischenstück (7) als Winkel aus Bandstahlmaterial ausgebildet ist.

6. Vorrichtung nach einem der vorhergehenden Ansprüche, dadurch gekennzeichnet, dass die Seitenwangen (3) das Lagerträgers (1) jeweils eine von innen (i) zugängliche Aufnahmeausnehmung (11) für ein Wellenlager mit diese nach aussen (a) begrenzendem Anlageflansch (12) für dieses aufweisen.

7. Vorrichtung nach einem der vorhergehenden Ansprüche, dadurch gekennzeichnet, dass die Aufnahmeöffnungen (5) der Längsholme (6) des Tragrahmens (2) jeweils durch das Maul eines in an sich bekannter Weise in Richtung (A) des Förderbandes offen angeordneten Profils etwa C-förmigen Querschnittes mit einem Bodensteg (13) und sich von dessen beiden Seiten wegerstreckenden Seitenstegen (14a bzw. 14b) gebildet sind.

8. Vorrichtung nach Anspruch 7, dadurch gekennzeichnet, dass das Maul durch zumindest einen einen der Seitenstege (14a bzw. 14b) verlängernden Randflansch (15a bzw. 15b) in Richtung (A) Förderband begrenzt ist.

9. Vorrichtung nach Anspruch 8, dadurch gekennzeichnet, dass der Randflansch (15a bzw. 15b) mit dem gegenüberliegenden Bereich des Bodensteges (13) eine Einführungsnut für das Zwischenstück (7) bildet.

10. Vorrichtung nach einem der vorhergehenden Ansprüche, dadurch gekennzeichnet, dass der Lagerträger (1) durch kraftschlüssige Halterung der Seitenlaschen (4) seiner beiden Seitenwangen (3) an den zugeordneten Längsholmen (6) des Tragrahmens (2) gegenüber diesem fixiert ist.

11. Vorrichtung nach Anspruch 10, dadurch gekennzeichnet, dass die Seitenlaschen (4) jeweils einen Längsschlitz (16) aufweisen, durch welchen eine eine Spannlasche (17) gegen die Innenseite (i) der Seitenlasche (4) ziehende Schraubverbindung (18, 19) hindurchgreift.

12. Vorrichtung nach Anspruch 11, dadurch gekennzeichnet, dass die Schraubverbindung mindestens zwei durch Löcher (20) im jeweiligen Längsholm (6) des Tragrahmens (2), vorzugsweise im Bodensteg (13) eines diesen bildenden Profils etwa C-förmigen Querschnitts, hindurchgreifende Schrauben (18) aufweist.

13. Vorrichtung nach einem der Ansprüche 10 bis 12, dadurch gekennzeichnet, dass die kraftschlüssige Halterung von der Innenseite (i) der Seitenlaschen (4) der Seitenwangen (3) des Lagerträgers (1) her betätigbar ist.

14. Vorrichtung nach Anspruch 12 und 13, dadurch gekennzeichnet, dass die Schrauben (18) mit ihrem Kopf jeweils zumindest teilweise in einer aussenseitigen Ansenkung (21) des jeweiligen Längsholms (6) des Tragrahmens (2) liegen und von der Innenseite (i) her über Muttern (19) festspannbar sind.

## Claims

1. Device for preferably displaceable mounting the bearing carrier (1) supporting a shaft of a return means of the band or belt, respectively, of a band or belt conveyor, as for instance the reversing shaft or the cocking shaft, by means of two lateral end pieces (3) arranged in distance with respect to each other, in which each of the lateral end pieces (3) with a tailward tongue (4) engages with a receiving opening in a longitudinal bar (6) of the carrying frame (2) of the band or belt conveyor, characterized in that either tailward tongue (4) of the bearing carrier (1) has a height (h) smaller than the clear height (H) of the receiving opening (5) in the corresponding longitudinal bar (6) of the carrying frame (2) and with its upper or lower surface (4a or 4b, respectively) is held in engagement with a corresponding fitting surface (5a or 5b, respectively) of the receiving opening (5) and that with the gap between the surface remote to said fitting surface (5a or 5b, respectively) and the inner surface of the receiving opening (5) of the corresponding longitudinal bar (6) of the carrying frame (2) adjacent to said surface there is mating an intermediate piece (7) with a stop section (8) with a stop face (7a) for a nose (9) of the bearing carrier (1), said stop face (7a) protruding from the longitudinal bar (6) and the stop section (8) with its side adjacent to said longitudinal bar (6) engaging with the latter.

2. Device according to claim 1, characterized in that the tailward tongue (4) of either lateral end piece (3) of the bearing carrier (1) with its lower surface (4b) is held in engagement with the adjacent fitting surface (5b) of the receiving opening (5) of the corresponding longitudinal bar (6) and that the corresponding intermediate piece (7) comprises a kinked portion (8) prodruding upwardly from the receiving opening (5), against which kinked portion (8) there is supporting the corresponding nose (9) of the bearing carrier (1).

3. Device according to claim 1, characterized in that the tailward tongue (4) of either lateral end piece (3) of the bearing carrier (1) with its upper surface (4b) is held in engagement with the adjacent fitting surface (5a) of the receiving opening (5) of the corresponding longitudinal bar (6) and that the corresponding intermediate piece (7) comprises a kinked portion (8) prodruding downwardly from the receiving opening (5), against which kinked portion (8) there is supporting the corresponding nose (9) of the bearing carrier (1).

4. Device according to anyone of the preceding claims for the displaceable mounting of the bearing carrier for a cocking shaft of the guide roll or pulley, respectively, for a flexible conveying band or belt, respectively, or of the drum for a hinged load supporting element conveyor or a plate conveyor, characterized in that the stop face (7a) of either intermediate piece (7) is formed by a kink (8) af same and that against same there is supporting an adjusting screw (10) penetrating a block (9) formed by the nose of the bearing carrier (1) and being actuatable from the direction of the front side (s) of the carrying frame.

5. Device according to anyone of the preceding claims, characterized in that the intermediate piece (7) is formed as angle piece of sheet steel material.

6. Device according to anyone of the preceding claims, characterized in that either of the lateral end pieces (3) of the bearing carrier (1) comprises a receiving recess (11) for a shaft bearing accessible from the inner side (i) and having a supporting flange (12) for said shaft bearing defining said receiving recess (11) against the outer ambiance (a).

7. Device according to anyone of the preceding claims, characterized in that the receiving openings (5) of the longitudinal bars (6) of the carrying frame (2) are formed by the mouth of a profile section of substantially C-like cross section with a central web (13) and side webs (14a and 14b, respectively) extending from both sides of same, said profile section being arranged in a manner known per se open in the direction (A) of the conveying band or belt, respectively.

8. Device according to claim 7, characterized in that said mouth is defined in the direction (A) of the conveying band or belt, respectively, by at least one edge flange (15a and/or 15b, respectively) extending one of said webs (14a and/or 14b, respectively).

9. Device according to claim 8, characterized in that said edge flange (15a or 15b, respectively) in cooperation with the opposite region of said central web (13) forms a notch for the introduction of the intermediate piece (7).

10. Device according to anyone of the preceding claims, characterized in that the bearing carrier (1) is fixed with respect to the carrying frame (2) force-locking mounting of the tailward tongues (4) of its two lateral end pieces (3) on the corresponding longitudinal bars (6) of the carrying frame (2).

11. Device according to claim 10, characterized in that either tailward tongue (4) comprises a longitudinal slot (16), through which penetrates a screw connection (18, 19) drawing a clamping plate (17) against the inner side (i) of said tailward tongue (4).

12. Device according to claim 11, characterized in that said screw connection comprises at least two screws (18) penetrating through holes (20) in the corresponding longitudinal bar (6) of the carrying frame (2), preferably in the central web (13) of a profile section of substantially C-like cross section forming same.

13. Device according to anyone of claims 10 to 12, characterized in that said force-locking mounting is actuatable from the inner side (i) of the tailward tongues (4) of the lateral end pieces (3) of the bearing carrier (1).

14. Device according to claims 12 and 13, characterized in that each of said screws (18) with its head at least partially lies in an outside chamfer (21) of the corresponding longitudinal bar (6) of the carrying frame (2) and may be tightened from the inner side (i) by a nut (19).

## Revendications

1. Dispositif de support, mobile de préférence, d'un support de palier (1) supportant l'arbre d'un poste de renvoi d'un convoyeur à courroie, comme par exemple l'arbre de renvoi ou l'arbre tendeur, au moyen de deux parois latérales (3), celles-ci engrenant chacune par une éclisse latérale (4) dans une ouverture de logement respective d'un longeron longitudinal (6) du cadre porteur (2) du convoyeur, caractérisé en ce que les éclisses latérales (4) du support de palier (1) possèdent une hauteur (h) inférieure à la hauteur (H) de l'ouverture le logement (5) dans le longeron longitudinal (6) du cadre porteur (2), et soient tenues en appui par leurs surfaces extérieures supérieure ou inférieure (4a resp. 4b) contre une surface d'appui correspondante (5a resp. 5b) de l'ouverture de logement (5), ainsi que par une pièce intermédiaire (7) munie d'un butoir (8) possédant une surface de butée (7a) — celle-ci surpassant le longeron longitudinal (6) — destinée à un talon (9) du support de palier (1), la pièce intermédiaire (7) engrenant dans l'espace entre la surface extérieure lointaine à la surface d'appui et la surface intérieure voisine de l'ouverture de logement (5) du longeron longitudinal (6) correspondant du cadre porteur (2), le butoir (8) s'appuyant par son côté voisin au longeron longitudinal (6) contre celui-ci.

2. Dispositif selon la revendication 1, caractérisé en ce que les éclisses latérales (4) des parois latérales (3) du support de palier (1) soient tenues en appui par leurs faces extérieures inférieures (4b) contre la surface de contact voisine (5b) de l'ouverture de logement (5) du longeron longitudinal respectif (6), et que la pièce intermédiaire (7) correspondante possède respectivement un coude (8) surpassant vers le haut l'ouverture de logement (5), sur laquelle s'appuie le talon (9) correspondant du support de palier (1).

3. Dispositif selon la revendication 1, caractérisé en ce que les éclisses latérales (4) des parois latérales (3) du support de palier (1) soient tenues en appui par leurs faces extérieures supérieures (4a) contre la surface de contact voisine (5a) de l'ouverture de logement (5) du longeron longitudinal respectif (6), et que la pièce intermédiaire (7) correspondante possède respectivement un coude (8) surpassant vers le bas l'ouverture de logement (5), sur laquelle s'appuie le talon (9) correspondant du support de palier (1).

4. Dispositif selon l'une des revendications précédentes pour le support mobile du support de palier de l'arbre tendeur d'un tambour de renvoi d'une bande transporteuse flexible élastique ou d'une étoile de renvoi d'une courroie à chaînes à articulations ou à écailles, caractérisé en ce que la surface de butée (7a) de la pièce intermédiaire (7) soit formée respectivement par un coude (8) de celle-ci, et qu'une vis de serrage (10) respectivement accessible du côté frontal (s) du cadre et traversant le support de palier (1) au niveau du talon d'appui (9) contrebute sur la surface d'appui (7a).

5. Dispositif selon l'une des revendications précédentes, caractérisé en ce que la pièce intermédiaire (7) soit une cornière formé d'acier feuillard.

6. Dispositif selon l'une des revendications précédentes, caractérisé en ce que les parois latérales (3) du support de palier (1) possèdent chacune une encoche de logement (11) pour un palier d'arbre accessible de l'intérieur (i), limitée vers l'extérieur (a) par un collet d'appui pour ce palier.

7. Dispositif selon l'une des revendications précédentes, caractérisé en ce que les ouvertures de logement (5) des longerons longitudinaux (6) du cadre porteur (2) soient formées par la bouche d'un profil à peu près en C disposé de façon connue, ouverte en direction (A) de la bande transporteuse, muni d'une âme de base (13) et d'âmes latérales (14a resp. 14b) s'écartant de celle-ci.

8. Dispositif selon la revendication 7, caractérisé en ce que la bouche soit limitée en direction (A) de la bande transporteuse par au moins un collet marginal (15a resp. 15b), celui-ci prolongeant l'une des âmes latérales (14a resp. 14b).

9. Dispositif selon la revendication 8, caractérisé en ce que le collet marginal (15a resp. 15b) et la zone de l'âme de base située en face forment une rainure d'insertion pour la pièce intermédiaire (7).

10. Dispositif selon l'une des revendications précédentes, caractérisé en ce que le support de palier (1) soit fixé sur le cadre porteur (2) par l'attachement par force des éclisses latérales (4) de ses deux parois latérales (3) contre les longerons longitudinaux (6) respectifs du cadre porteur.

11. Dispositif selon la revendication 10, caractérisé en ce que les éclisses latérales (4) possédent chacune une fente longitudinale (16) que traverse un assemblage par vis (18, 19), tirant une éclisse de tension (17) contre la face intérieure (i) de l'éclisse latérale (4).

12. Dispositif selon la revendication 11, caractérisé en ce que l'assemblage soit effectué à l'aide de vis (18) traversant respectivement deux trous (20) dans le longeron longitudinal (6) respectif du cadre porteur (2), de préférence dans l'âme de base du profil à peu près en C constituant celui-ci.

13. Dispositif selon l'une des revendications 10 à 12, caractérisé en ce que l'attache par force soit manipulable par le côte intérieur (i) des éclisses latérales (4) des parois latérales (3) du support de palier (1).

14. Dispositif selon les revendications 12 et 13, caractérisé en ce que les vis (18) se trouvent chacune au moins partiellement dans un chanfreinage (21) sur le côté extérieur du longeron longitudinal (6) respectif du cadre porteur (2) et soient serrables au moyen d'écrous (19) par le côté intérieur (i).

Fig. 2

Fig. 1

0 074 649